Europäisches Patentamt

European Patent Office

Office européen des brevets

(11) Veröffentlichungsnummer : **0 089 516**
**B1**

(12) **EUROPÄISCHE PATENTSCHRIFT**

(45) Veröffentlichungstag der Patentschrift :
06.05.87

(51) Int. Cl.⁴ : **G 01 B 7/16**

(21) Anmeldenummer : **83101920.3**

(22) Anmeldetag : **26.02.83**

(54) **Tieftemperatur-Wegaufnehmer.**

(30) Priorität : **20.03.82 DE 3210256**

(43) Veröffentlichungstag der Anmeldung :
**28.09.83 Patentblatt 83/39**

(45) Bekanntmachung des Hinweises auf die Patenterteilung : **06.05.87 Patentblatt 87/19**

(84) Benannte Vertragsstaaten :
**CH FR GB LI**

(56) Entgegenhaltungen :
**US-A- 2 941 298
US-A- 3 158 939
US-A- 3 319 338
US-A- 3 789 508**

(73) Patentinhaber : **Kernforschungszentrum Karlsruhe GmbH
Weberstrasse 5 Postfach 3640
D-7500 Karlsruhe 1 (DE)**

(72) Erfinder : **Nyilas, Arman, Dr.
Margaritenweg 1
D-7513 Stutensee-4 (DE)**
Erfinder : **Henninger, Klaus
Alte Weingarten Strasse 74
D-7500 Karlsruhe (DE)**

## Beschreibung

Die Erfindung betrifft einen Tieftemperatur-Wegaufnehmer nach dem Oberbegriff des Anspruches 1.

Ein derartiger Wegaufnehmer ist prinzipiell aus der US-A-3 319 338 bekannt ; Er dient der Ermittlung von Werkstoffgrößen, wie Streckgrenze, Zugfestigkeit und Bruchdehnung bei Temperaturen zwischen 203 K und 478 K. Bei diesem Wegaufnehmer werden zwei Schneiden in einem vorbestimmten Abstand auf eine Werkstoffprobe federnd geklemmt, und der bei Belastung der Werkstoffprobe sich ändernde Schneidenabstand wird über vier in Brückenschaltung auf eine Blattfeder applizierte Dehnungsmeßstreifen in ein Spannungssignal umgesetzt.

Ein Abstandshalter zwischen den beiden Meßschenkeln verhindert eine unzulässige Krafteinwirkung auf die Blattfeder.

Die Nachteile eines derartigen Wegaufnehmers bestehen insbesondere darin, daß für jeden von mehreren Dehnungsbereichen der Werkstoffprobe jeweils ein anderer an diesen Dehungsbereich angepaßter Wegaufnehmer erforderlich ist und daß dessen Platzbedarf in Längsrichtung der Werkstoffprobe mindestens 20 mm beträgt.

Außerdem ist der Einsatz einer derartigen Meßeinrichtung auf Temperaturen oberhalb von 203,15 K beschränkt. Aus der US-A-3 158 939 ist ein Wegaufnehmer bekannt, bei dem, die eine Schneide starr und die andere, die Dehnungsmeßstreifen tragende Schneide federnd mit einem Gehäuse verbunden ist. Die Klemmvorrichtung hat jedoch keine federnden Klemmschneiden.

Bei einem weiteren Wegaufnehmer (US-A-3 789 508) werden die beiden Meßschneiden mit Gummibändern an der Probe befestigt, die für niedrige Temperaturen gänzlich ungeeignet sind.

Ein Wegaufnehmer, bei dem die Meßempfindlichkeit geändert werden kann, ist aus der US-A-2.941 298 bekannt. Ein Tragschenkel ist an einem seiner Enden mit einer ersten Meßschneide versehen und am anderen Ende mit einem Ende eines Meßschenkels gelenkig verbunden, dessen anderes Ende eine zweite Meßschneide aufweist. Die Klemmeinrichtung drückt die Probe gegen die Meßschneiden über zwei abgewinkelte Bügelenden, deren Abstand währen der Messung unveränderlich ist. Die Bewegung des Meßschenkels wird über ein komplexes, auf Kugeln gelagertes, Hebelsystem auf einen induktiven Wegaufnehmer übertragen. Dieser Wegaufnehmer ist für Messungen bei tiefen Temperaturen nicht vorgesehen.

Der Erfindung liegt die Aufgabe zugrunde, einen Wegaufnehmer zu entwickeln, der es ermöglicht, einen weiten Bereich der Dehnung der Werkstoffprobe bei einstellbarer Meßempfindlichkeit zu erfassen, und der für Messungen bei Kryotemperaturen im Bereich bis 4 K geeignet ist.

Diese Aufgabe wird bei einem Wegaufnehmer nach dem Oberbegriff des Anspruches 1 durch die in dessen Kennzeichen genannten Merkmale gelöst.

Die mit dem vorgeschlagenen Wegaufnehmer erzielten Vorteile bestehen insbesondere darin, daß Tragschenkel und Meßschenkel mit den Meßschneiden unabhängig von dem die Meßwerte umformenden Dehnungsmeßstreifen arbeiten, daß der Dehnungsbereich und damit auch die Empfindlichkeit der Messung einstellbar sind, daß die Bauhöhe der Meßeinrichtung im Bereich der Werkstoffprobe sehr klein ist und daß die Messungen auch im Bereich bis 4 K temperaturunabhängig sind.

Ein Ausführungsbeispiel eines Tieftemperatur-Wegaufnehmers ist in der Zeichnung dargestellt und wird im folgenden näher beschrieben. Es zeigen

Figur 1 eine Draufsicht auf den Wegaufnehmer,

Figur 2 eine Seitenansicht des Wegaufnehmers,

Figur 3 Eichgeraden für den Wegaufnehmer

Figur 4 Meßempfindlichkeitskurven für den Wegaufnehmer.

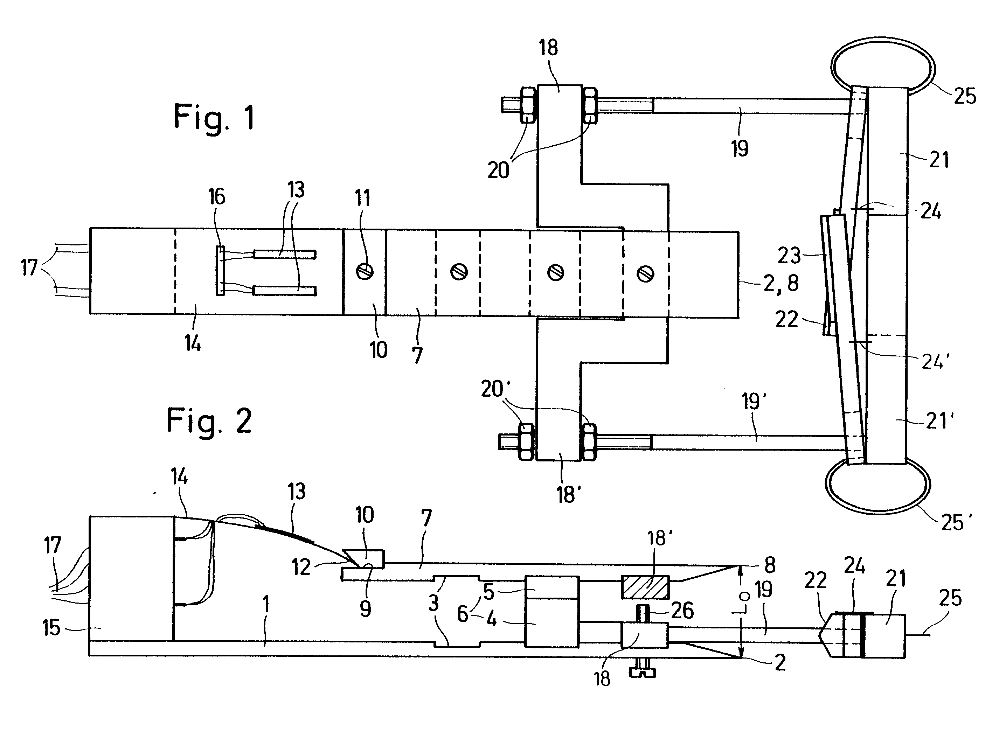

In Fig. 1 ist der erfindungsgemäße Wegaufnehmer in seiner Draufsicht und in Fig. 2 in seiner Seitenansicht dargestellt.

Ein Tragschenkel 1 ist an einem seiner Enden als eine erste Meßschneide 2 ausgebildet und weist an einer Seite in vorbestimmten Abständen mehrere durchgehende, senkrecht zu seiner Längsrichtung angeordnete Quernuten 3 auf.

In einer frei wählbaren Quernut 3 ist ein aus einem Federwerkstoff bestehender U-förmig ausgebildeter Lagerbock 4 mit dem Tragschenkel 1 verschraubt. Die freien Schenkel des Lagerbockes 4 weisen an den Innenseiten Einsenkungen zum Aufnehmen der kegelförmigen Enden einer Lagerwelle auf, die in einem Lagerblock 5 eingeschlossen ist.

Der Lagerblock 5 ist in einer der Quernuten 3 des Meßschenkels 7 durch eine Schraube fixiert und bildet gemeinsam mit der mit ihren Spitzen in den Einsenkungen des Lagerbockes 4 ruhenden Lagerwelle ein spielfreies und reibungsarmes Spitzenlager 6, das den Tragschenkel 1 mit einem Meßschenkel 7 gelenkig verbindet. Das eine Ende des Meßschenkels 7 ist als eine der ersten Meßschneide 2 zugeordnete zweite Meßschneide 8 ausgebildet, das andere Ende weist eine Aussparung 9 auf, in der ein Klemmstück 10 mit einer Schraube 11 gehalten ist. Das Klemmstück 10 weist eine Abschrägung 12 auf, die mit der Aussparung 9 des Meßschenkels 7 eine V-fömige Nut bildet.

Die Dehnungsmeßstreifen 13 sind auf eine Blattfeder 14 appliziert, von der ein Ende über einen aus Isoliermaterial bestehenden Anschlußblock 15 fest mit dem Tragschenkel 1 verbunden ist und deren freies Ende an der Abschrägung 12 des Klemmstrückes 10 gleitend in der zwischen Aussparung 9 des Meßschenkels 7 und dem Klemmstück 10 gebildeten V-förmigen Nut geführt ist.

Über eine Lötleiste 16 sind die Anschlüsse der Dehnungsmeßstreifen 13 mit den Adern 17 eines Meßkabels verbunden, welche durch Bohrungen des Anschlußblockes 15 geführt sind.

In einer der Meßschneiden 2, 8 unmittelbar benachbarten Quernut 3 des Tragschenkels 1 und des Meßschenkels 7 ist jeweils ein Ausleger 18, 18' verschraubt. Eine Bohrung des Auslegers 18, 18' nimmt eine Gewindestange 19, 19' auf, die mit Muttern 20, 20' verstellbar und deren freies Ende mit einer Traverse 21, 21' fest verbunden ist. Auf der der ersten bzw. der zweiten Meßschneide 2, 8 zugewandten Seite des Auslegers 18, 18' ist jeweils eine erste Klemmschneide 22 bzw. eine zweite Klemmschneide 23 über Federstege 24, 24' an der Traverse 21, 21' angeschlossen und mit einer am äußeren Ende von Traverse 21, 21' und Klemmschneide 22, 23 angreifenden Ringfeder 25, 25' vorgespannt.

Der Tragschenkel 1 ist in einer der ersten Meßschneide 2 benachbarten Quernut 3 mit einer Gewindebohrung versehen, die eine Stellschraube 26 zum Einstellen des Abstandes $L_0$ zwischen der ersten Meßschneide 2 und der zweiten Meßschneide 8 am Beginn einer Messung aufnimmt.

Bei einem Ausführungsbeispiel des vorgeschlagenen Tieftemperatur-Wegaufnehmers beträgt der Abstand der Meßschneiden 10 mm und kann mit der Stellschraube 26 auf 8 mm verkleinert werden.

Je näher das Spitzenlager 6 an die Meßschneiden 2, 8 gebracht wird, umso größer wird die Empfindlichkeit der Meßeinrichtung und umso kleiner wird der mit den Meßschneiden erfaßbare Dehnungsbereich. Umgekehrt wird mit zunehmendem Abstand des Spitzenlagers 6 von den Meßschneiden 2, 8 die Empfindlichkeit kleiner und der Dehnungsbereich größer.

Durch Verschieben des den Tragschenkel 1 mit dem Meßschenkel 7 verbindenden Spitzenlagers 6 können also die Empfindlichkeit und der Dehnungsbereich eingestellt werden. Durch Änderung des Abstandes der Meßschneiden 2, 8 mit der Stellschraube 26 wird eine weitere stufenlose Änderung des Dehnungsbereiches bewirkt.

Am Beginn jeder Messung wird bei einer vorbestimmten Einstellung des Spitzenlagers 6 und der Stellschraube 26 mit einem Mikrometer eine Eichung des Wegaufnehmers vorgenommen, indem vorbestimmte Abstände der Meßschneiden 2, 8 mit dem Mikrometer eingestellt und die zugehörigen Brückenspannungen gemessen werden.

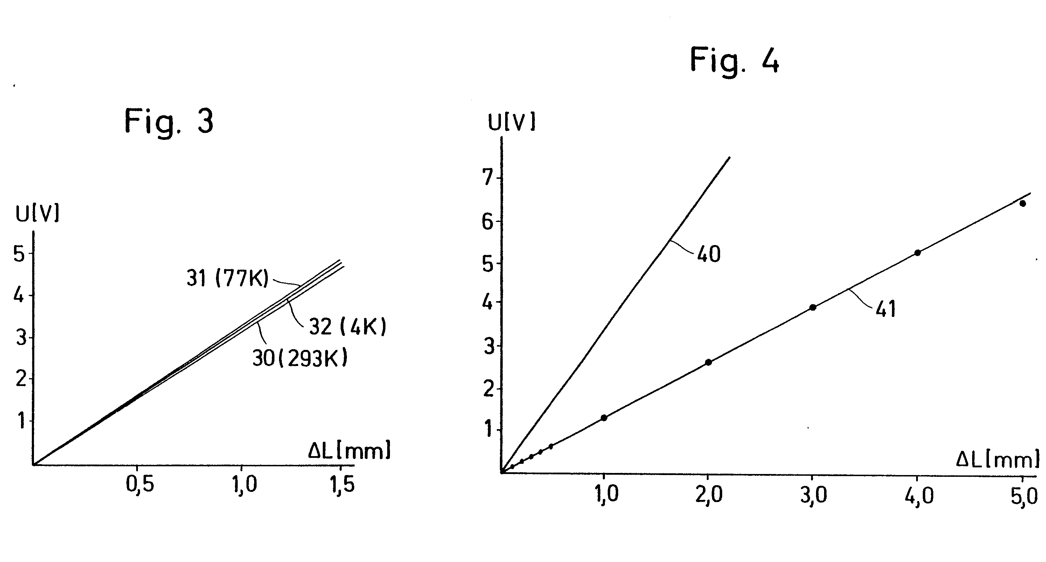

In Fig. 3 sind Eichgeraden für einen Wegaufnehmer nach der Erfindung bei einem Abstand der Meßschneiden 2 und 8 von $L_0 = 9,7$ mm als Bezugslänge und Anordnung des Spitzenlagers 6 in der mittleren der in Fig. 2 gezeichneten drei Quernuten 3 dargestellt. Die untere, erste Eichgerade 30 gilt für Raumtemperatur 293 K, die obere, zweite Eichgerade 31 ist bei in Flüssigstickstoff (77 K) eingetauchtem Wegaufnehmer und die mittlere, dritte Eichgerade 32 für Flüssighelium (4 K) gültig.

Der Einfluß des Abstandes des Spitzenlagers 6 von den Meßschneiden auf die Empfindlichkeit ergibt sich aus Fig. 4. Die erste Empfindlichkeitsgerade 40 zeigt bei einem Abstand der Meßschneiden von $L_0 = 8,9$ mm und bei Raumtemperatur die Brückenspannung U in Abhängigkeit von der bei Zugbelastung der Werkstoffprobe auftretenden Längenänderung $\Delta L$ in mm, wenn das Spitzenlager 6 in der mittleren der drei in Fig. 2 gezeichneten Quernuten 3 angeordnet ist. Die zweite Empfindlichkeitsgerade 41 ergibt sich unter sonst gleichen Bedingungen, wenn das Spitzenlager 6 in der von den Meßschneiden 2, 8 weiter entfernten Quernut 3 eingesetzt ist. Die Meßempfindlichkeit des Wegaufnehmers steigt also an, wenn der Abstand des Spitzenlagers 6 von der Meßschneiden 2, 8 kleiner wird.

Bezugszeichenliste :

Figur 1 und 2

    1 Tragschenkel
    2 1. Meßschneide (an 1)
    3 Quernut in 1 und 7
    4 Lagerbock von 6
    5 Lagerblock von 6
    6 Spitzenlager
    7 Meßschenkel
    8 2. Meßschneide (an 7)
    9 Aussparung
    10 Klemmstück
    11 Schraube in 10
    12 Abschrägung an 10
    13 Dehnungsmeßstreifen
    14 Blattfeder
    15 Anschlußblock
    16 Lötleiste
    17 Adern eines Meßkabels
    18, 18' Ausleger
    19, 19' Gewindestange
    20, 20' Mutter
    21, 21' Traverse
    22 1. Klemmschneide
    23 2. Klemmschneide
    24, 24' Federsteg
    25, 25' Ringfeder
    26 Stellschraube
    $L_0$ Abstand von 2 und 8

Figur 3

    30 1. Eichgerade 273 K
    31 2. Eichgerade 77 K (Fl $N_2$ = flüssiger Stickstoff)
    32 3. Eichgerade 4 K (Fl He = flüssiges Helium)

Figur 4

    40 1. Empfindlichkeitsgerade
    41 2. Empfindlichkeitsgerade
    $\Delta L$ Abstandsänderung von 2 und 8 bei Zugbelastung der Probe
    U Brückenspannung in Volt

## Patentansprüche

1. Tieftemperatur-Wegaufnehmer zum Messen der Längenänderung einer bei Kryotemperaturen bis 4 K in einer Werkstoffprüfmaschine auf Zug belasteten Werkstoffprobe, mit den Merkmalen :

a) eine erste Meßschneide (2) und eine zweite Meßschneide (8) sind an eine Werkstoffprobe angeklemmt.

b) mit einer der Meßschneiden (2, 8) ist eine Blattfeder (14) fest verbunden, auf welche vier in einer Brückenschaltung angeordnete Dehnungsmeßstreifen (13) appliziert sind,

c) eine durch die Längenänderung der Werkstoffprobe erzeugte Auslenkung einer der Meßschneiden (2, 8) wirkt auf die Dehnungsmeßstreifen (13) und erzeugt eine der Änderung des Abstandes zwischen der ersten Meßschneide (2) und der zweiten Meßschneide (8) proportionale Signalspannung.

d) es ist eine Einrichtung (26) vorhanden, mit der ein minimaler Abstand der Meßschneiden (2, 8) einstellbar ist,

e) der Anschluß des Wegaufnehmers an die Werkstoffprobe erfolgt mittels einer Klemmvorrichtung (18, 18'), die aus zwei federnden Klemmschneiden (22, 23) besteht, von denen jede mit jeweils einer der Meßschneiden (2, 8) über eine den Abstand zwischen Meßschneide (2, 8) und Klemmschneide (22, 23) einstellende Gewindestange (19, 19') verbunden ist, gekennzeichnet durch folgende Merkmale :

f) ein Tragschenkel (1) ist an einem seiner Enden als erste Meßschneide (2) und ein Meßschenkel (7) ist an einem seiner Enden als zweite Meßschneide (8) ausgebildet,

g) der Tragschenkel (1) und der Meßschenkel (7) weisen an ihren einander zugewandten Seiten, senkrecht zu ihrer Längsrichtung, in vorbestimmten Abständen angeordnet, mehrere durchgehende Quernuten (3) auf,

h) ein den Tragschenkel (1) mit dem Meßschenkel (7) verbindendes Spitzenlager (6) ist zum Einstellen der Meßempfindlichkeit und des Dehnungsbereiches wahlweise in eine der Quernuten (3) einsetzbar,

i) das den Tragschenkel (1) mit dem Meßschenkel (7) verbindende Spitzenlager (6) ist spielfrei und reibungsarm ausgebildet,

j) die durch die Längenänderung der Werkstoffprobe erzeugte Auslenkung des freien Endes des Meßschenkels (7) wirkt auf die Dehnungsmeßstreifen (13),

k) der Tragschenkel (1) ist in der der ersten Meßschneide (2) benachbarten Quernut (3) mit einer Gewindebohrung versehen, die eine Stellschraube aufnimmt, die als Einrichtung (26) zum Einstellen des Abstandes zwischen der ersten Meßschneide (2) und der zweiten Meßschneide (8) am Beginn einer Messung dient.

2. Tieftemperatur-Wegaufnehmer nach Anspruch 1, gekennzeichnet durch folgende Merkmale :

a) ein · auf den Tragschenkel (1) aufschraubbarer Lagerbock (4) besteht aus einem Federwerkstoff und ist U-förmig ausgebildet,

b) die freien Schenkel des Lagerbockes (4) weisen an den Innenseiten Einsenkungen zum Aufnehmen der kegelförmigen Enden einer Lagerwelle auf,

c) die Lagerwelle ist fest in einen Lagerblock (5) eingeschlossen, der in der gewählten Quernut (3) mit dem Meßschenkel (7) verschraubbar ist.

3. Tieftemperatur-Wegaufnehmer nach Anspruch 1, gekennzeichnet durch folgende Merkmale :

a) das freie Ende des Meßschenkels (7) weist eine Aussparung (9) auf, in der ein Klemmstück (10) mit einer Schraube (11) gehalten ist,

b) das freie Ende des Klemmstückes (10) weist eine Abschrägung (12) auf, die mit der Aussparung (9) des Meßschenkels (7) eine V-förmige Nut bildet,

c) in der zwischen der Aussparung (9) des Meßschenkels (7) und Klemmstück (10) gebildeten V-förmigen Nut ist das freie Ende der an der Abschrägung (12) des Klemmstückes (10) gleitenden, die Dehnungsmeßstreifen (13) tragenden Blattfeder (14) geführt,

d) das andere Ende der Blattfeder (14) ist über einen Anschlußblock (15) fest mit dem Tragschenkel (1) verbunden.

## Claims

1. Cryo-transducer for measuring variations in length of a material specimen tensile loaded in a material testing machine at cryo-temperatures down to 4 K, comprising :

a) a first contact blade (2) and a second contact blade (8) clamped to a material specimen,

b) a plate spring (14) with strain gauges (13) applied in a bridge arrangement and which is rigidly connected to one of the contact blades (2, 8),

c) a deflection of one of the contact blades (2, 8), generated by the variation in length of the material specimen, acting on the strain gauges (13) and generating a signal voltage proportional to the change of spacing between the first contact blade (2) and the second contact blade (8),

d) a device (26) by which a minimum spacing of the contact blades (2, 8) can be set,

e) connection of the displacement transducer to the material specimen via a clamping device (18, 18') consisting of two elastic clamping blades each (22, 23), each of them connected with one of the contact blades (2, 8) via a threaded rod (19, 19') setting the spacing between the contact blades (2, 8) and the clamping blades (22, 23), with

f) a supporting leg (1) made as the first contact blade (2) on one of its ends and a measuring leg (7) made as the second contact blade (8) on one of its ends,

g) the supporting leg (1) and the measuring leg (7) having several continuous transverse slots (3) arranged at predetermined spacings on the sides facing each other, normal to their longitudinal direction,

h) a conical bearing (6) connecting the supporting leg (1) with the measuring leg (7) to be used for setting the measurement sensitivity and the strain zone and which can be optionally placed into one of the transverse slots (3),

i) the conical bearing (6) connecting the supporting leg (1) with the measuring leg (7), made free from play and causing little friction,

j) the deflection of the free end of the measuring leg (7), caused by the variation in length of the material specimen, acting on the strain gauge (13),

k) the supporting leg (1) provided with a tapped whole in the transverse slot (3) adjacent to the first measuring blade (2), which tapped hole accommodating an adjusting screw serving as a device (26) for setting the spacing between the first contact blade (2) and the second contact blade (8) at the beginning of a measurement.

2. Cryo-displacement transducer according to Claim 1, with

a) a bearing block (4) which can be screwed onto the supporting leg (1), consisting of a spring material and made like a U,

b) the free legs of the bearing block (4) provided with depressions on the inner sides for accommodating the conical ends of a bearing shaft,

c) the bearing shaft firmly enclosed in a bearing block (4) which can be screwed with the measuring leg (7) in the selected transverse slot (3).

3. Cryo-displacement transducer according to Claim 1, with

a) the free end of the measuring leg (7) provided with a recess (9) in which a clamping piece (10) is held with a screw (11),

b) the free end of the clamping piece (10) provided with a bevel (12) forming a V-type nut with a recess (9) of the measuring leg (7),

c) the V-type nut formed between the recess (9) of the measuring leg (7) and the clamping piece (10) guiding the free end of the plate spring (14) sliding along the bevel (12) of the clamping piece (10) and supporting the strain gauges (13),

d) the other end of the plate spring (14) rigidly connected with the supporting leg (1) via a connection block (15).


**Revendications**

1. Capteur de déplacement destiné à mesurer la modification de la longueur d'un échantillon de matière soumis à un effort de traction dans un appareil d'examen des matériaux, à une très basse température pouvant aller jusqu'à 4 Kelvin, présentant les caractéristiques suivantes :

a) une première lame de mesure amincie (2) et une seconde lame de mesure amincie (8) sont serrées sur un échantillon de matière,

b) une lame de ressort (14) sur laquelle sont appliqués quatre extensomètres (13), disposés en un montage en pont, est reliée rigidement avec une lame de mesure (2, 8),

c) une déviation de l'une des lames de mesure (2, 8), produite par une modification de la longueur de l'échantillon de matière, agit sur les extensomètres (13) et produit une tension de signalisation proportionnelle à la modification de la distance qui sépare la première lame de mesure (2) de la seconde lame de mesure (8),

d) il est prévu un dispositif (26) avec lequel on peut régler une distance minimale entre les lames de mesure (2, 8),

e) le raccordement du capteur de déplacement à l'échantillon de matière s'opère au moyen d'un dispositif de serrage (18, 18'), qui est constitué de deux lames de serrage (22, 23) élastiques, qui sont chaque fois reliées à une des lames de mesure (2, 8) par l'intermédiaire d'une tige filetée (19, 19'), réglant la distance entre les lames de mesure (2, 8) et les lames de serrage (22, 23), capteur de déplacement caractérisé en ce que :

f) une branche porteuse (1) est réalisée, à l'une de ses extrémités, sous la forme d'une lame ou bec aminci de mesure (2), et une branche de mesure (7) est réalisée, à une de ses extrémités sous la forme d'une seconde lame ou bec aminci de mesure (8),

g) la branche porteuse (1) et la branche de mesure (7) présentent sur leurs faces tournées l'une vers l'autre, disposées perpendiculairement à leur longueur et à des distances déterminées préalablement, plusieurs gorges transversales (3) qui les traversent,

h) une suspension à pivot (6), reliant la branche porteuse (1) avec la branche de mesure (7) peut être mise en place, au choix, dans une des gorges transversales (3) pour régler la sensibilité et la zone de dilatation,

i) la suspension à pivot (6) qui relie la branche porteuse (1) avec la branche de mesure (7) est réalisée sans jeu et avec un frottement minimum,

j) la déviation de l'extrémité libre de la branche (7) de mesure, produite par la modification de la longueur de l'échantillon de matière agit sur les extensomètres (13),

k) la branche porteuse (1) est pourvue, dans la gorge transversale (3) adjacente au premier bec de mesure aminci (2), d'un trou fileté qui reçoit une vis, qui sert de dispositif (26) pour régler, au commencement d'une mesure, la distance qui sépare la première lame de mesure (2) de la seconde lame de mesure (8),

l) les bornes des extensomètres (13) sont reliées aux brins (17) d'un câble de mesure, qui passent dans des perforations du bloc de raccordement (15).

2. Capteur de déplacement à basse température suivant la revendication 1, caractérisé de la façon suivante :

a) un palier support (4), qui peut être vissé sur la branche porteuse (1) est constitué d'une matière élastique et est réalisé en forme de U,

b) les ailes du palier support (4) comportent, sur leurs faces intérieures, des évidements pour recevoir les extrémités coniques d'un axe,

c) l'axe est inclus solidement dans un bloc (5) qui peut être vissé avec la branche de mesure (7) dans la gorge transversale (3) choisie.

3. Capteur de déplacement suivant la revendication 1, caractérisé de la façon suivante :

a) l'extrémité libre de la branche de mesure (7) porte un évidement (9) dans lequel est maintenue une pièce de serrage (10) au moyen d'une vis (11),

b) l'extrémité libre de la pièce de serrage (10) présente un chanfrein (12) qui forme, avec l'évidement (9) de la branche de mesure (7), une gorge en forme de V,

c) dans la gorge en forme de V, formée entre l'évidement (9) de la branche de mesure (7) et la pièce de serrage (10) passe l'extrémité libre de la lame de ressort (14) glissant sur le chanfrein (12) de la pièce de serrage (10), et portant les extensomètres (13),

d) l'autre extrémité de la lame de ressort (14) est reliée solidement avec la branche porteuse (1), par l'intermédiaire d'un bloc de raccordement (15).

Fig. 1

Fig. 2

0 089 516

Fig. 3

Fig. 4